# EUROPÄISCHE PATENTSCHRIFT

(11) **EP 2 405 057 B1**
(45) Veröffentlichungstag und Bekanntmachung des Hinweises auf die Patenterteilung: **06.06.2018**
(21) Anmeldenummer: 10007101.8
(22) Anmeldetag: 09.07.2010
(51) Int. Cl.: E01C 19/48

(54) **Baumaschine mit Betriebsartensteuerung**
Construction machine with operation mode management
Machine de construction dotée d'une commande de types de fonctionnement

(43) Veröffentlichungstag der Anmeldung: 11.01.2012
(73) Patentinhaber: Joseph Vögele AG, 67067 Ludwigshafen (DE)
(72) Erfinder: Buschmann, Martin, 67435 Neustadt (DE); Rutz, Arnold, 67065 Ludwigshafen (DE)
(74) Vertreter: Grünecker Patent- und Rechtsanwälte PartG mbB

(56) Entgegenhaltungen:
- EP-A1- 0 335 339
- EP-A2- 1 544 354
- DE-A1- 10 234 217
- US-A- 4 026 658
- US-B1- 7 497 641

## Beschreibung

Die Erfindung betrifft einen Straßenfertiger, gemäß dem Oberbegriff des Anspruchs 1 bzw. ein Verfahren für den Betrieb eines Straßenfertigers gemäß Anspruch 6.

In der Praxis wird heutzutage von Baumaschinen gefordert, dass sie intelligent sind, den Bediener entlasten, eine optimale Arbeitsqualität liefern, sich durch eine leichte Bedienbarkeit auszeichnen, Arbeitskomfort bieten, umweltschonend betreibbar sind sowie ein hohes Maß an Arbeitssicherheit gewährleisten.

Um unterschiedliche Funktionen einer Baumaschine, insbesondere eines Straßenfertigers, zu steuern bzw. zu überwachen, werden Fahrerbedienkonsolen als Mensch-Maschinen-Schnittstelle verwendet. Über die Fahrerbedienkonsole kann beispielsweise die Geschwindigkeit oder die Richtung der Baumaschine eingestellt werden. Auf Displayanzeigen der Fahrerbedienkonsole können dem Bediener Betriebsparameter signalisiert werden, die dem aktuellen Betrieb der Baumaschine entsprechen. Der Bediener kann den Betrieb der Baumaschine aktiv beeinflussen, indem er diverse Funktionen auf der Fahrerbedienkonsole wählt. Die Auswahl einer bestimmten Funktion geschieht meistens durch Tastendruck.

Bei einer bereits bekannten Fahrerbedienkonsole eines Straßenfertigers sind alle wichtigen Einbau- und Fertigerfunktionen auf der Bedienkonsole direkt über einzelne Taster regelbar. Insbesondere wechselt der Fertiger auf Tastendruck in eine gewünschte Betriebsart. In Abhängigkeit der gewählten Betriebart werden relevante Einstellungen an der Maschine automatisch vorgenommen. So wird z. B. die Fahrstufe der Schaltgetriebe in Abhängigkeit von der Betriebsart automatisch vom Steuerungssystem gewählt. Mit einem Betriebsartenwechsel können ebenfalls prozessrelevante Parameter, z. B. die Tamperdrehzahl oder die Vibrationsdrehzahl, automatisch abgerufen werden. Mit einem Betriebsartenschalter kann zwischen einer neutralen Betriebsart, einer Betriebsart zum Umsetzen, einer Betriebsart zum Ansetzen, einer Betriebsart zum Einbauen bzw. einer Betriebsart zum Transport des Straßenfertigers gewählt werden.

Die neutrale Betriebsart kann genutzt werden, um den Dieselmotor warmlaufen zu lassen bzw. die Bohlenheizung vorzuwärmen. Vorzugsweise sind dabei alle anderen Antriebe des Fertigers blockiert.

Ist die Betriebsart zum Umsetzen aktiviert, werden dem Fertiger Getriebestufen zugeschalten, die ein schnelles Umpositionieren des Fertigers erlauben. Besonders bei einem Bahnwechsel des Fertigers kann diese Betriebsart eingesetzt werden, um den Fertiger schnell zu versetzen. Zum Rangieren und Ansetzen des Fertigers wird üblicherweise die Betriebsart zum Ansetzen gewählt. In dieser Betriebsart kann der Fertiger nur mit geringer Geschwindigkeit fortbewegt werden. Außerdem lassen sich die Antriebe des Fertigers in dieser Betriebsart besonders feinfühlig steuern, wodurch sich der Fertiger präzise manövrieren lässt.

Beim Asphaltieren wird die Betriebsart zum Einbau gewählt. Dabei stehen dem Bediener sämtliche automatischen Einbaufunktionen zur Verfügung.

Schließlich kann der Bediener die Betriebsart zum Transport wählen, um z. B. den Fertiger auf öffentlichen Straßen zu fahren.

Aus dem Stand der Technik sind ebenfalls Schnellgangschalter bekannt, die in Baumaschinen, insbesondere in Minibaggern, verbaut sind. Je nach Arbeitssituation ermöglicht dieser dem Fahrer die Wahl zwischen einer maximalen Antriebsleistung oder hoher Fahrgeschwindigkeit.

Für industrielle Zwecke werden aktuell auch Betriebsartenwahlschalter angeboten, die neben der Wahl der Betriebsart anwendungsspezifisch Funktionen einschränken bzw. zulassen. Dabei können dank einer Identifikationsverwaltung in der Maschinensteuerung, je nach Betriebsart, anwendungsspezifische Berechtigungen für den Betrieb der Maschine vergeben werden.

Die US 7,497,641 B1 betrifft einen Straßenfertiger mit einer höhenverstellbaren Einbaubohle und einem Ballastsystem, welches in Reaktion auf eine Höhenverstellung der Einbaubohle eine Gewichtsverlagerung durchführt.

Die EP 1 544 354 A2 beschreibt ein Verfahren zum Steuern eines Straßenfertigers, wobei Betriebsparameter für eine Grundeinstellung durch weitere Betriebsparameter, die zuvor während einer Feineinstellung abgespeichert wurden, ergänzt werden, sodass eine Vielzahl von Betriebsparametern vorliegen.

Die DE 102 34 217 A1 beschreibt einen Straßenfertiger mit einem darauf installierten Messsystem, das zur Ermittlung der Schichtdicke des neu verlegten Straßenbelags ausgebildet ist.

In den Veröffentlichungen "Road News, 06/Dezember 2005", "Road News, 10/April 2007", sowie "Road News, Ausgabe 19/April 2010" der Joseph Vögele AG wird das an Straßenfertigern der Joseph Vögele AG eingesetzte Bedienkonzept "ErgoPlus" beschrieben. Das Bedienkonzept "ErgoPlus" umfasst eine Memory-Funktion für einen erleichterten Einbaubetrieb. Damit lassen sich bestimmte Betriebsparameter im Einbaubetrieb abspeichern und zu einem späteren Zeitpunkt automatisiert wieder aufrufen.

Der Erfindung liegt die Aufgabe zugrunde, mit einfachen konstruktiven Mitteln einen Straßenfertiger sowie ein Verfahren für dessen Betrieb, dahingehend zu verbessern, dass der Straßenfertiger dem Bediener die Arbeit erleichtert und für ein gleichmäßiges sowie verbessertes Arbeitsergebnis sorgt.

Die gestellte Aufgabe wird mit den Merkmalen des Anspruchs 1 bzw. des Anspruchs 6 gelöst.

Verbesserte Weiterbildungen sind mit den Merkmalen der Unteransprüche gegeben.

Die Erfindung betrifft eine Baumaschine, die in Form eines Straßenfertigers vorliegt, umfassend einen Betriebsartenwahlschalter, der mindestens eine erste Betriebsart und eine zweite Betriebsart für die Baumaschine bestimmt, mindestens einen Antrieb, der mit einer Funktionskomponente der Baumaschine verbunden ist und dazu ausgebildet ist, die Funktionskomponente zu verstellen, und ein Steuerungssystem, an das der Betriebsartenwahlschalter und der mindestens eine Antrieb angeschlossen sind, wobei das Steuerungssystem, wenn die erste Betriebsart eingestellt ist, dazu ausgebildet ist, eine erste Stellung des mindestens einen Antriebes zu speichern, und wobei das Steuerungssystem dazu ausgebildet ist, den mindestens einen Antrieb aus der ersten Stellung in eine zweite Stellung zu fahren, wenn der Betriebsartenwahlschalter die zweite Betriebsart bestimmt. Erfindungsgemäß ist das Steuerungssystem der Baumaschine dazu ausgebildet, den mindestens einen Antrieb aus der zweiten Stellung, wenn sich die Baumaschine in der zweiten Betriebsart befindet, automatisch in die gespeicherte erste Stellung zu verstellen, wenn der Betriebsartenwahlschalter die erste Betriebsart bestimmt.

Durch die erfindungsgemäße Betriebsartensteuerung wird die Anzahl der erforderlichen Bedienerinteraktionen reduziert. Neben der Komfortsteigerung für den Bediener trägt die erfindungsgemäße Betriebsartensteuerung auch dazu bei Bedienfehler zu vermeiden, um damit die Einbauqualität und die Bediensicherheit weiter zu verbessern. Außerdem kann durch die vorgeschlagene Erfindung ein engerer Zeitrahmen gefahren werden, wodurch sich Arbeitskosten verringern und der Kraftstoffverbrauch der Baumaschine sinkt.

Bei der Erfindung ist die gespeicherte erste Stellung des mindestens einen Antriebs eine Einbaustellung. Außerdem ist es vorteilhaft, wenn die zweite Stellung des mindestens einen Antriebs eine Transportstellung ist. Dies ist insbesondere vorteilhaft beim Bau von Flächenbefestigungen, wie Parkplätzen oder Lagerplätzen. Bei diesen Baumaßnahmen wird typischerweise Bahn neben Bahn gebaut, wobei die Maschine ständig zwischen den Operationen Einbau und Transport wechselt.

Bei der Erfindung ist die erste Betriebsart der Baumaschine eine Einbaubetriebsart. In der Einbaubetriebsart können dem Bediener spezifische Funktionen zur Verfügung stehen, die einen sicheren Einbau von Mischgut gewährleisten.

In einer weiteren zweckmäßigen Ausführungsform der Erfindung ist die zweite Betriebsart eine Transportbetriebsart. In der Transportbetriebsart kann die Baumaschine bzw. der Straßenfertiger auf sichere Art und Weise, aber auch schnell, umgesetzt werden.

Typisch für den Anwendungsfall wäre es, wenn die Funktionskomponente ein Nivellierzylinder, eine Einbaubohle, eine Verteilerschnecke, ein Materialbunker oder ein Fahrwerkabstreifer ist. Eine automatische Steuerung dieser Funktionskomponenten, wie es durch die Erfindung möglich ist, führt zu einem besonders qualitativen Asphaltierergebnis.

Erfindungsgemäß ist eine Ausführtaste vorgesehen, wobei der mindestens eine Antrieb dazu ausgebildet ist, wenn der Betriebsartenwahlschalter die erste Betriebsart bestimmt, von der zweiten Stellung automatisch in die gespeicherte erste Stellung zu verfahren, wenn die Ausführtaste gedrückt ist. Dadurch lässt sich vom Bediener ein Zeitpunkt bestimmen, ab welchem ein Verfahren des mindestens einen Antriebs in die erste gespeicherte Stellung bzw. in die Einbaustellung geschieht.

Bei einer weiteren zweckmäßigen Ausführungsform der Erfindung ist das Steuerungssystem dazu ausgebildet, mehrere Antriebe zeitgleich zu verstellen, wenn der Betriebsartenwahlschalter auf die erste oder die zweite Betriebsart gesetzt wird. Dadurch können mehrere Antriebe besonders schnell in die gewünschte Position gebracht werden.

Bei der Erfindung ist vorgesehen, dass der mindestens eine Antrieb ein Linearantrieb ist. Im Straßenbau erfüllt der Linearantrieb eine robuste Funktion zum Verstellen einzelner Funktionskomponenten. Ebenfalls ist der Linearantrieb unempfindlich gegen Verschleiß.

Gegenstand der Erfindung ist auch ein Verfahren für den Betrieb einer Baumaschine, die in Form eines Straßenfertigers vorliegt, mit einem Steuerungssystem und mindestens einem an das Steuerungssystem angeschlossenen Antrieb. Bei diesem Verfahren wird zunächst eine erste Betriebsart gewählt. Daraufhin wird der mindestens eine Antrieb in eine erste Stellung manuell gefahren, falls noch keine Position gespeichert wurde. Dann wird die erste Stellung des mindestens einen Antriebs durch das Steuerungssystem gespeichert, wenn sich die Baumaschine in der ersten Betriebsart befindet. Im Anschluss wird eine zweite Betriebsart gewählt, wodurch der mindestens eine Antrieb in eine zweite Stellung verfährt. Kennzeichnend für das Verfahren ist, dass bei einem erneuten Wählen der ersten Betriebsart, beim Wechsel von der zweiten Betriebsart zu der ersten Betriebsart, das Steuerungssystem den mindestens einen Antrieb automatisch in die gespeicherte erste Stellung bewegt, wenn eine vorbestimmte Ausführtaste des erfindungsgemäßen Straßenfertigers gedrückt wird.

Durch das vorgeschlagene Verfahren kann das Fehlerpotential für den Bediener erheblich eingeschränkt werden. Anders als bei herkömmlichen Verfahren müssen bei der Erfindung die Antriebe nicht durch den Bediener bei einem Wechsel der Betriebsart einzeln in die gewünschte Position verfahren werden. Dies spart Zeit und garantiert ein gleichmäßiges Arbeitsergebnis.

Vorzugsweise ist die erste Stellung des mindestens einen Antriebs eine Einbaustellung. Besonders für die Einbaustellung ist es ideal, wenn die Antriebe immer wieder in dieselbe Position verfahren, weil dadurch eine gleichmäßige Asphaltierschicht entsteht.

Vorzugsweise ist die zweite Stellung des mindestens einen Antriebs eine Transportstellung. Damit kann schnell zwischen der Einbaustellung und der Transportstellung geschalten werden, ohne dabei vom Bediener erhebliche Interaktionen zu verlangen.

Bei einer zweckmäßigen Ausführungsform der Erfindung ist eine Aufnahmetaste vorgesehen, um wiederkehrende Abläufe aufzuzeichnen. Um die Aufzeichnung abzurufen sind vorzugsweise entsprechende Bedienelemente vorgesehen. So ist es beispielsweise möglich, dass der Bediener der Baumaschine bzw. des Straßenfertigers die Aufnahmetaste betätigt, um eine Folge von Betriebsartenänderungen bei Arbeitsbeginn oder Arbeitsende abzuspeichern. Die jeweilige Betriebsart und ihr Einstellwert werden zusammen mit einem relativen Zeitstempel gespeichert. Vorzugsweise beginnt die Zeitmessung mit dem Drücken der Aufnahmetaste. Mit einem erneuten Drücken der Aufnahmetaste kann die Aufzeichnung beendet werden.

Bei einer weiteren zweckmäßigen Ausführungsform kann die aufgezeichnete Sequenz mit Betätigung einer Starttaste abgerufen werden. Weil sich sowohl Sequenzen beim Arbeitsbeginn, als auch beim Arbeitsende aufzeichnen lassen, kann der Maschinenbediener im Idealfall die Maschine mit zwei Tasten in Betrieb nehmen und anhalten.

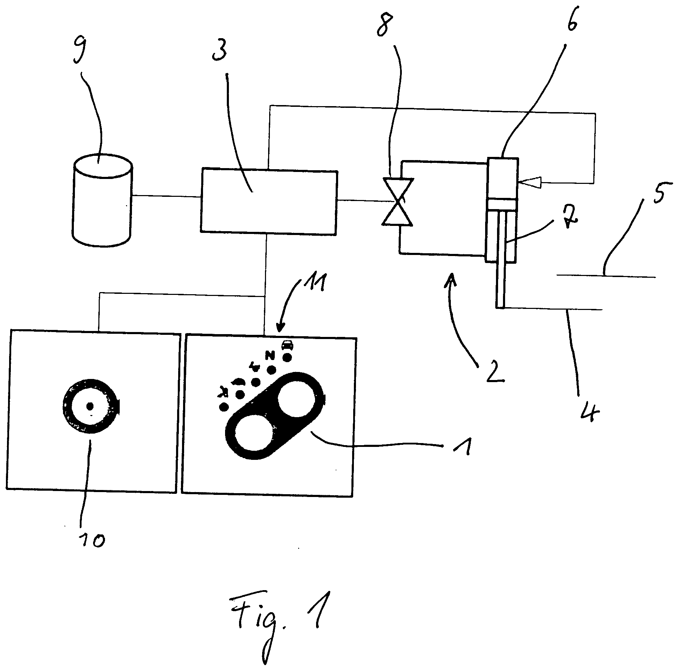

Der Gegenstand der Erfindung wird schematisch in der Figur 1 gezeigt.

Die Figur 1 zeigt einen Betriebsartenwahlschalter 1, einen Antrieb 2 und ein Steuerungssystem 3. In der Figur 1 ist der Antrieb 2 in einer Einbaustellung 4 zu sehen. Zusätzlich wird in der Figur 1 auf eine Transportstellung 5 hingewiesen, die der Antrieb 2 einnehmen kann. Der Antrieb 2, wie es in der Figur 1 gezeigt wird, kann einen Zylinder 6 umfassen, in dem eine Kolbenstange 7 angeordnet ist. Die Kolbenstange 7 ist beidseitig druckbeaufschlagbar. Ein Ventil 8 ist zu sehen, das den Zylinder 6 hydraulisch bzw. pneumatisch wahlweise mit Druck ansteuert. Mit dem Steuerungssystem 3 ist ein Speicher 9 verbunden. Um eine Position des Antriebs 2 zu erkennen, ist das Steuerungssystem 3 direkt an den Zylinder 6 angeschlossen. Außerdem besteht zwischen dem Steuerungssystem 3, dem Ventil 8, dem Speicher 9 sowie dem Betriebsartenwahlschalter 1 eine direkte Verbindung. Schließlich wird in der Figur 1 eine Ausführtaste 10 gezeigt, die ebenfalls mit dem Steuerungssystem 3 direkt in Verbindung steht. Über dem Betriebsartenwahlschalter 1 werden Symbolleuchten 11 gezeigt, die wahlweise durch ein Aufleuchten die ausgewählte Betriebsart dem Bediener anzeigen. Beispielsweise ist für die Transportbetriebsart das Symbol eines Fahrzeugs gewählt. Wahlweise kann das Steuerungssystem 3 jedoch auch noch mit anderen Tasten verbunden sein, wie z. B. einer Aufnahmetaste oder einer Starttaste.

Der Bediener kann im Betrieb den mindestens einen Antrieb 2 manuell in die geeignete Einbauposition 4 fahren und diese Position des Antriebs 2 abspeichern, wenn sich die Baumaschine in der Betriebsart für den Einbau befindet. Die gespeicherte Position des Antriebs 2 wird im Speicher 9 hinterlegt und kann zu einem späteren Zeitpunkt abgerufen werden. Wird eine andere Betriebsart als die Betriebsart für Einbau gewählt, bewegt sich der Antrieb 2 in die Transportstellung 5. In der Transportstellung 5 kann die Baumaschine bzw. der Straßenfertiger beispielsweise die Fahrbahn wechseln. Wird erneut die Einbaubetriebsart gewählt, wird dies dem Steuerungssystem 3 signalisiert, wodurch das Steuerungssystem 3 veranlasst, dass der mindestens eine Antrieb 2 automatisch in die zuvor gespeicherte Einbaustellung verfährt. Damit wird erreicht, dass aus der Transportbetriebsart stets zu denselben Einstellungen der Einbaubetriebsart zurückgekehrt werden kann.

Das Verfahren gemäß der Erfindung wird nun beispielhaft an der Höhenverstellung des Schneckensystems erläutert.

Zunächst wird für das System die Betriebsart des Einbaus gewählt. Dabei verfährt der Bediener die Schnecke manuell in die für den Einbau geeignete Höhenlage. Hat das Schneckensystem die geeignete Höhenlage erreicht, wird diese von einem Sensor erfasst. Der Sensor überträgt dann die Daten der Höhenlage an das Steuerungssystem, welche diese abspeichert. Anschließend wechselt der Bediener in eine der Transportbetriebsarten. Dabei verfährt das Steuerungssystem 3 die Schneckenhöhe selbstständig in eine vordefinierte Transportstellung. Typischerweise ist diese Stellung die höchste Position, um für maximale Bodenfreiheit zu sorgen. Optional kann dabei die Schneckenhöhe auch manuell durch eine Taste eingestellt werden. Befindet sich die Schnecke in der Transportstellung, kann der Bediener beispielsweise die Maschine von einem Einbauende A zu einem Einbauanfang B versetzen. Ist der Bediener mit der Maschine am Einbauanfang B angekommen, wechselt er in die Betriebsart für den Einbau. Daraufhin wird automatisch vom Steuerungssystem 3 die Schecke in die zuvor abgespeicherte Position für den Einbau gefahren, wenn der Bediener eine Verstellung der Schnecke in die Einbauposition aktiv durch das Drücken einer Ausführtaste einleitet.

Selbst wenn das Verfahren am Beispiel der Schneckenhöhenverstellung erläutert wurde, ist der beschriebene Ablauf für eine, mehrere oder alle Funktionskomponenten für den Einbau zeitgleich möglich.

## Patentansprüche

1. Straßenfertiger, umfassend
einen Betriebsartenwahlschalter (1), der mindestens eine erste Betriebsart und eine zweite Betriebsart für den Straßenfertiger bestimmt, wobei die erste Betriebsart eine Einbaubetriebsart des Straßenfertigers ist, wobei in der ausgewählten Einbaubetriebsart einem Bediener spezifische Funktionen des Straßenfertigers zur Verfügung stehen,
mehrere Antriebe (2), die jeweils mit einer Funktionskomponente des Straßenfertigers verbunden sind und dazu ausgebildet sind, die jeweiligen Funktionskomponenten zu verstellen, wobei die mehreren Antriebe (2) Linearantriebe sind, und
ein Steuerungssystem (3), an das der Betriebsartenwahlschalter (1) sowie die mehreren Antriebe (2) angeschlossen sind,
wobei das Steuerungssystem (3) dazu ausgebildet ist, die mehreren Antriebe (2) aus einer ersten Stellung in eine jeweilige zweite Stellung zu fahren, wenn der Betriebsartenwahlschalter (1) die zweite Betriebsart bestimmt,
wobei das Steuerungssystem (3), wenn die Einbaubetriebsart durch den Betriebsartenwahlschalter (1) eingestellt ist, dazu ausgebildet ist, eine jeweilige erste Stellung der mehreren Linearantriebe (2) zu speichern, wobei die jeweilige gespeicherte erste Stellung der mehreren Linearantriebe (2) eine Einbaustellung (4) der jeweiligen Linearantriebe (2) ist, und
wobei das Steuerungssystem (3) dazu ausgebildet ist, die mehreren Linearantriebe (2) aus der jeweiligen zweiten Stellung, wenn sich der Straßenfertiger in der zweiten Betriebsart befindet, automatisch in die jeweiligen gespeicherten ersten Stellungen der mehreren Linearantreibe (2) zu verstellen, wenn der Betriebsartenwahlschalter (1) die erste Betriebsart bestimmt,
**dadurch gekennzeichnet, dass**
eine Ausführtaste (10) vorgesehen ist, wobei die mehreren Linearantriebe (2) dazu ausgebildet sind, wenn der Betriebsartenwahlschalter (1) die erste Betriebsart bestimmt, von der jeweiligen zweiten Stellung automatisch in die jeweilige gespeicherte erste Stellung zu verfahren, wenn die Ausführtaste (10) gedrückt ist.

2. Straßenfertiger nach Anspruch 1, **dadurch gekennzeichnet, dass** die jeweilige zweite Stellung der mehreren Linearantriebe (2) eine Transportstellung (5) ist.

3. Straßenfertiger nach einem der vorangehenden Ansprüche, **dadurch gekennzeichnet, dass** die zweite Betriebsart eine Transportbetriebsart des Straßenfertigers ist.

4. Straßenfertiger nach einem der vorangehenden Ansprüche, **dadurch gekennzeichnet, dass** die Funktionskomponente ein Nivellierzylinder, eine Einbaubohle, eine Verteilerschnecke, ein Materialbunker oder ein Fahrwerkabstreifer ist.

5. Straßenfertiger nach einem der vorangehenden Ansprüche, **dadurch gekennzeichnet, dass** das Steuerungssystem (3) dazu ausgebildet ist, die mehreren Linearantriebe (2) zeitgleich zu verstellen, wenn der Betriebsartenwahlschalter (1) auf die erste oder die zweite Betriebsart gesetzt wird.

6. Verfahren für den Betrieb eines Straßenfertigers mit einem Steuerungssystem (3) und mehreren an das Steuerungssystem (3) angeschlossenen Linearantrieben (2), umfassend die folgenden Schritte:
Wählen einer ersten Betriebsart mittels eines Betriebsartenwahlschalters (1), wobei die erste Betriebsart eine Einbaubetriebsart des Straßenfertigers ist, und wobei in der ausgewählten Einbaubetriebsart einem Bediener spezifische Funktionen des Straßenfertigers zur Verfügung stehen,
Verfahren der mehreren Linearantriebe (2) jeweils in eine erste Stellung,
Speichern der jeweiligen ersten Stellung der mehreren Linearantriebe (2) durch das Steuerungssystem (3), wenn sich der Straßenfertiger in der ersten Betriebsart befindet, wobei die gespeicherte erste Stellung der jeweiligen Linearantriebe (2) eine Einbaustellung (4) ist,
Wählen einer zweiten Betriebsart mittels des Betriebsartenschalters (1), wodurch die mehreren Linearantriebe (2) jeweils in eine zweite Stellung verfahren, und
Wählen der ersten Betriebsart mittels des Betriebsartenschalters (1), wobei beim Wechsel von der zweiten Betriebsart zu der ersten Betriebsart das Steuerungssystem (3) die mehreren Linearantriebe (2) automatisch in die gespeicherte erste Stellung bewegt, wenn eine vorbestimmte Ausführtaste (10) des Straßenfertigers gedrückt wird.

7. Verfahren nach Anspruch 6, **dadurch gekennzeichnet, dass** die zweite Stellung der jeweiligen Linearantriebe (2) eine Transportstellung (5) ist.

8. Verfahren nach einem der Ansprüche 6 oder 7, **dadurch gekennzeichnet, dass** eine Aufnahmetaste vorgesehen ist, um wiederkehrende Abläufe aufzuzeichnen.

9. Verfahren nach Anspruch 8, **dadurch gekennzeichnet, dass** die Aufzeichnung Abläufe umfasst, die stattfinden, wenn sich die mehreren Linearantriebe (2) von der ersten in die zweite Stellung oder von der zweiten in die erste Stellung bewegen.

10. Verfahren nach Anspruch 8 oder 9, **dadurch gekennzeichnet, dass** eine Starttaste vorgesehen ist, um die Aufzeichnung abzurufen.

## Claims

1. Road finishing machine, comprising
an operating mode selector switch (1) which determines at least one first operating mode and one second operating mode for the road finishing machine, wherein the first operating mode is a laying operating mode of the road finishing machine, wherein in the selected laying operating mode, specific functions of the road finishing machine are available to an operator,
several drives (2) which are each connected with a functional component of the road finishing machine and are adapted to adjust the functional components, wherein the drives (2) are linear drives, and
a control system (3) to which the operating mode selector switch (1) and the several drives (2) are connected, wherein the control system (3) is adapted to move the several linear drives (2) from a first position to a second position when the operating mode selector switch (1) determines the second operating mode,
wherein, when the laying operating mode is determined by the operating mode selector switch (1), the control system (3) is adapted to store the first positions of the several linear drives (2), wherein the stored first positions of the several linear drives (2) are laying positions (4) of the respective linear drives (2), and
the control system (3) is adapted to automatically adjust the several linear drives (2) from the second positions, when the road finishing machine is in the second operating mode, to the stored first positions of the several linear drives (2) when the operating mode selector switch (1) determines the first operating mode,
**characterized in that**
an execution key (10) is provided, wherein, when the operating mode selector switch (1) determines the first operating mode, the several linear drives (2) are adapted to automatically move from the second positions to the stored first positions when the execution key (10) is pressed.

2. Construction machine according to claim 1, **characterized in that** the second positions of the several linear drives (2) are a transport position (5).

3. Construction machine according to one of the preceding claims, **characterized in that** the second operating mode is a transport operating mode of the road finishing machine.

4. Construction machine according to one of the preceding claims, **characterized in that** the functional component is a leveling cylinder, a screed, a spreading screw, a material bunker, or a moving gear strike-off element.

5. Construction machine according to one of the preceding claims, **characterized in that** the control system (3) is designed to adjust the several linear drives (2) simultaneously when the operating mode selector switch (1) is set to the first or the second operating mode.

6. Method for the operation of a road finishing machine with a control system (3) and several linear drives (2) connected to the control system (3), comprising the following steps:
selecting a first operating mode with an operating mode selector switch (1), wherein the first operating mode is a laying operating mode of the road finishing machine, and wherein in the selected laying operating mode, specific functions of the road finishing machine are available to an operator,
moving the several linear drives (2) each to a first position,
storing the first positions of the several linear drives (2) by the control system (3) when the road finishing machine is in the first operating mode, wherein the stored first positions of the several linear drives (2) are laying positions,
selecting a second operating mode with the operating mode selector switch (1), whereby the several linear drives (2) each move to a second position, and
selecting the first operating mode with the operating mode selector switch (1), wherein by a change from the second operating mode to the first operating mode, the control system (3) automatically moves the several linear drives (2) to the stored first positions if a predetermined execution key (10) of the road finishing machine is pressed.

7. Method according to claim 6, **characterized in that** the second positions of the several linear drives (2) are transport positions (5).

8. Method according to one of claims 6 or 7, **characterized in that** a recording key (10) is provided to record recurring processes.

9. Method according to claim 8, **characterized in that** the recording comprises processes which take place when the several linear drives (2) move from the first to the second positions or from the second to the first positions.

10. Method according to claim 8 or 9, **characterized in that** a start key is provided for retrieving the recording.

## Revendications

1. Finisseur de route comprenant
un commutateur de sélection de modes de fonctionnement (1), qui détermine au moins un premier mode de fonctionnement et un deuxième mode de fonctionnement pour le finisseur de route, le premier mode de fonctionnement étant un mode de fonctionnement de pose de revêtement du finisseur de route, des fonctions spécifiques du finisseur de route étant à disposition d'un utilisateur lorsque le mode de fonctionnement de pose de revêtement est sélectionné,
plusieurs entraînements (2), qui sont reliés respectivement à un composant fonctionnel du finisseur de route et sont conçus pour assurer un déplacement desdits composants fonctionnels respectifs, lesdits plusieurs entraînements (2) étant des entraînements linéaires, et
un système de commande (3) auquel sont raccordés le commutateur de sélection de modes de fonctionnement (1) ainsi que lesdits plusieurs entraînements (2),
le système de commande (3) étant configuré pour déplacer lesdits plusieurs entraînements (2) d'une première position à une deuxième position respective lorsque le commutateur de sélection de modes de fonctionnement (1) détermine le deuxième mode de fonctionnement,
le système de commande (3) étant configuré pour, lorsque le mode de fonctionnement de pose de revêtement est sélectionné par le commutateur de sélection de modes de fonctionnement (1), mémoriser une première position respective desdits plusieurs entraînements linéaires (2), ladite première position respective mémorisée desdits plusieurs entraînements linéaires (2) étant une position de pose de revêtement (4) desdits entraînements linéaires (2) respectifs, et
le système de commande (3) étant configuré pour déplacer automatiquement lesdits plusieurs entraînements linéaires (2) de la deuxième position respective, lorsque le finisseur de route se trouve dans le deuxième mode de fonctionnement, vers les premières positions respectives mémorisées desdits plusieurs entraînements linéaires (2), lorsque le commutateur de sélection de modes de fonctionnement (1) détermine le premier mode de fonctionnement,
**caractérisé**
**en ce qu'**il est prévu une touche d'exécution (10), lesdits plusieurs entraînements linéaires (2) étant configurés pour, lorsque le commutateur de sélection de modes de fonctionnement (1) détermine le premier mode de fonctionnement, se déplacer automatiquement de la deuxième position respective à la première position respective mémorisée lorsque la touche d'exécution (10) est pressée.

2. Finisseur de route selon la revendication 1, **caractérisé en ce que** ladite deuxième position respective desdits plusieurs entraînements linéaires (2) est une position de transport (5).

3. Finisseur de route selon l'une des revendications précédentes, **caractérisé en ce que** le deuxième mode de fonctionnement est un mode de fonctionnement de transport du finisseur de route.

4. Finisseur de route selon l'une des revendications précédentes, **caractérisé en ce que** le composant fonctionnel est un cylindre de nivellement, une table de pose de revêtement, une vis sans fin de répartition, une trémie à matériaux ou un racleur de train de roulement.

5. Finisseur de route selon l'une des revendications précédentes, **caractérisé en ce que** le système de commande (3) est configuré pour déplacer simultanément dans le temps lesdits plusieurs entraînements linéaires (2), lorsque l'on place le commutateur de sélection de modes de fonctionnement (1) sur le premier ou sur le deuxième mode de fonctionnement.

6. Procédé pour assurer le fonctionnement d'un finisseur de route avec un système de commande (3) et plusieurs entraînements linéaires (2) raccordés au système de commande (3), comprenant les étapes suivantes :
sélection d'un premier mode de fonctionnement au moyen du commutateur de sélection de modes de fonctionnement (1), le premier mode de fonctionnement étant un mode de fonctionnement de pose de revêtement du finisseur de route, et des fonctions spécifiques du finisseur de route étant à disposition d'un utilisateur lorsque le mode de fonctionnement de pose de revêtement est sélectionné,
déplacement desdits plusieurs entraînements linéaires (2) respectivement dans une première position, mémorisation de la première position respective desdits plusieurs entraînements linéaires (2) par le système de commande (3), lorsque le finisseur de route se trouve dans le premier mode de fonctionnement, la première position mémorisée des entraînements linéaires (2) respectifs étant une position de pose de revêtement (4), sélection d'un deuxième mode de fonctionnement au moyen du commutateur de sélection de modes de fonctionnement (1), produisant le déplacement desdits plusieurs entraînements linéaires (2) respectivement dans une deuxième position, et
sélection du premier mode de fonctionnement au moyen du commutateur de sélection de modes de fonctionnement (1), le système de commande (3) déplaçant automatiquement, lors du changement du deuxième mode de fonctionnement vers le premier mode de fonctionnement, lesdits plusieurs entraînements linéaires (2) dans la première position mémorisée, lorsqu'une touche d'exécution (10) prédéterminée du finisseur de route est pressée.

7. Procédé selon la revendication 6, **caractérisé en ce que** la deuxième position des entraînements linéaires (2) respectifs, est une position de transport (5) .

8. Procédé selon l'une des revendications 6 ou 7, **caractérisé en ce qu'**il est prévu une touche d'enregistrement pour enregistrer des séquences récurrentes.

9. Procédé selon la revendication 8, **caractérisé en ce que** l'enregistrement comprend des séquences, qui ont lieu lorsque lesdits plusieurs entraînements linéaires (2) se déplacent de la première à la deuxième ou de la deuxième à la première position.

10. Procédé selon la revendication 8 ou la revendication 9, **caractérisé en ce qu'**il est prévu une touche de démarrage en vue d'appeler l'enregistrement.
